Europäisches Patentamt

(19) European Patent Office

Office européen des brevets

(11) EP 0 644 155 B1

(12) **FASCICULE DE BREVET EUROPEEN**

(45) Date de publication et mention
de la délivrance du brevet:
**23.04.1997 Bulletin 1997/17**

(51) Int. Cl.$^6$: **C01B 21/072**

(21) Numéro de dépôt: **94401943.9**

(22) Date de dépôt: **01.09.1994**

(54) **Procédé de préparation en continu de nitrure d'aluminium par carbonitruration d'alumine dans un réacteur à lit coulant**

Verfahren zur kontinuierlichen Herstellung von Aluminiumnitrid durch Karbonitridierung von Aluminiumoxid in einem Fliessendbettreaktor

Process for the continuous preparation of aluminium nitride by carbo nitridation of alumina in a moving bed reactor

(84) Etats contractants désignés:
**AT BE CH DE DK ES FR GB GR IE IT LI LU NL SE**

(30) Priorité: **17.09.1993 FR 9311113**

(43) Date de publication de la demande:
**22.03.1995 Bulletin 1995/12**

(73) Titulaire: **ELF ATOCHEM S.A.**
**92800 Puteaux (FR)**

(72) Inventeurs:
• **Ravenel, Pierre**
**F-69230 Saint-Genis-Laval (FR)**
• **Bachelard, Roland**
**F-69007 Lyon (FR)**

(56) Documents cités:
**EP-A- 0 519 806**     **WO-A-92/16457**
**DE-A- 319 046**      **GB-A- 22 435**
**GB-A- 23 740**      **US-A- 3 032 398**

**Description**

L'invention a pour objet un procédé de préparation en continu de nitrure d'aluminium par carbonitruration d'alumine utilisant un réacteur à lit coulant.

On connaît des procédés de préparation en continu de nitrure d'aluminium mettant en oeuvre un réacteur à lit coulant.

Dans US-A-3 032 398, on prépare du nitrure d'aluminium dans un four comprenant plusieurs colonnes indépendantes en graphite formant des chambres de réaction.

Dans DE-A-319 046, on propose un procédé de préparation en continu de nitrure d'aluminium dans un four subdivisé en chambres au moyen d'éléments chauffants en matériau réfractaire.

Dans WO 92/16467, il a été proposé d'effectuer la réaction de carbonitruration d'alumine dans un réacteur à lit coulant fonctionnant avec un taux de remplissage constant correspondant à 65-95 % du volume utile du réacteur. Ce procédé permet de préparer entre 0,5 et 0,8 kg de granulés de nitrure d'aluminium par heure.

Dans la demande de brevet européen 0519806, il a été proposé d'utiliser un réacteur méthodique fonctionnant à taux de remplissage constant dont le rapport longueur/diamètre interne est généralement compris entre 5 et 20. Ce procédé permet de préparer 2,42 kg de granulés de nitrure d'aluminium par heure.

L'inconvénient majeur de ces différentes technologies réside dans le fait que la productivité de ce type de réacteur reste limitée.

L'une des manières d'accroître la productivité consiste à augmenter la production de nitrure d'aluminium tout en maintenant constant le volume du réacteur. Il en résulte généralement un produit hétérogène dû principalement à une réaction de carbonitruration incomplète.

Une autre manière d'augmenter la productivité consiste à diminuer le volume du réacteur tout en maintenant la production constante. Une telle réduction de volume présente l'avantage de conserver à la fois une production et une homogénéité du produit élevées.

Il a maintenant été trouvé un nouveau procédé de préparation de nitrure d'aluminium par carbonitruration d'alumine permettant d'atteindre une productivité élevée en utilisant un réacteur de faible volume, ce procédé étant caractérisé en ce que la réaction entre l'alumine, le carbone et l'azote est conduite dans un réacteur à lit coulant dont la zone réactionnelle présente une pluralité de conduits.

L'expression "lit coulant" est utilisée ici dans son sens conventionnel, à savoir qu'elle désigne un réacteur de type à écoulement piston.

Par zone réactionnelle on entend ici la zone du réacteur présentant une température compatible avec la réaction de carbonitruration de l'alumine, cette température étant généralement comprise entre 1350 et 2000 °C.

Dans le procédé conforme à l'invention, on utilise un réacteur à lit coulant fonctionnant à taux de remplissage constant, à temps de séjour des réactifs homogène et constant et à percolation de la charge dans des conditions assurant une composition homogène de la phase gazeuse autour de chaque particule à un niveau donné et des échanges thermiques et des transferts de masse intenses.

Le taux de remplissage constant peut être obtenu grâce à une extraction continue, par exemple par doseur pondéral ou volumétrique situé à la base du lit coulant, et à un écoulement type piston de la charge dans une virole à section constante.

La percolation de la charge par l'azote est avantageusement réalisée à contre-courant des solides et à vitesse élevée entre les granulés.

Dans le procédé selon l'invention, on utilise un réacteur dont la zone réactionnelle comporte une pluralité de conduits de faible volume ce qui présente deux avantages essentiels.

D'une part, ceci permet de réduire les dépenses énergétiques résultant du chauffage puisque le transfert thermique est amélioré.

D'autre part, ceci réduit l'amplitude du gradient thermique existant entre la matière conductrice de la chaleur et le centre de chaque conduit. Il en résulte ainsi un produit présentant une meilleure homogénéité.

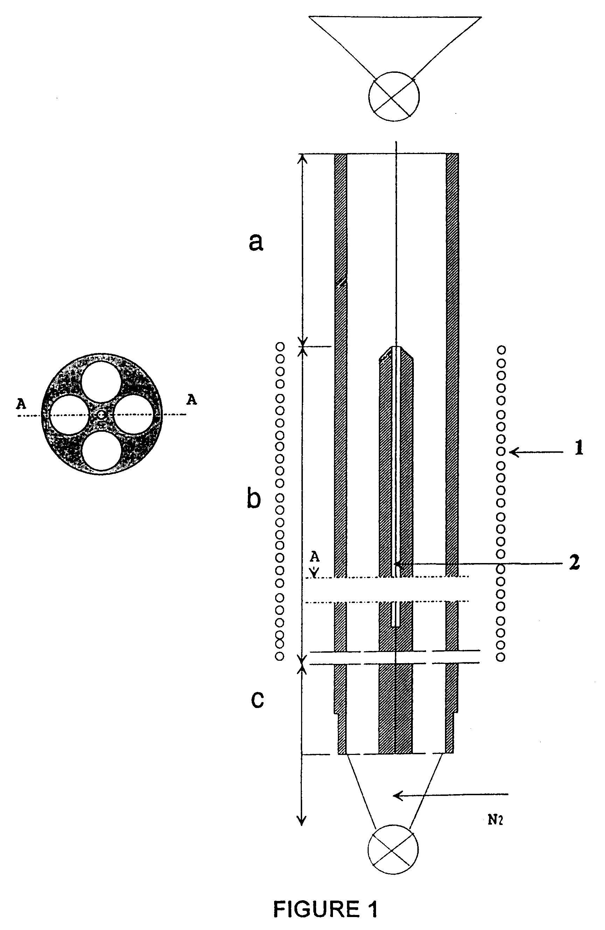

A titre purement illustratif, un réacteur selon le procédé de l'invention est représenté sur la figure 1 annexée.

Sur cette figure, les symboles notés a, b et c correspondent aux différentes zones du réacteur et ceux notés 1 et 2 font référence aux principaux accessoires.

Dans le procédé conforme à l'invention, le réacteur assure au moins les fonctions :

- de réchauffeur des granulés de départ (matières premières mises en forme) par les gaz d'exhaure, c'est-à-dire d'échangeur de chaleur (zone a),
- de réacteur de carbonitruration (zone b),
- de réchauffeur de l'azote entrant dans le réacteur par contact avec les granulés sortant de la zone réactionnelle du four (zone c).

Le réacteur schématisé sur la figure 1, et qui est destiné à fonctionner de manière sensiblement verticale, comprend essentiellement un conduit (zone a) et une zone réactionnelle comprenant une pluralité de conduits (zone b), généralement en graphite.

La zone (a) est reliée à sa partie supérieure à un doseur servant à alimenter le réacteur en granulés frais, le niveau de remplissage étant maintenu constant grâce à une sonde (non représentée).

La partie supérieure de la zone (a) est également reliée à un collecteur de gaz d'exhaure (non représenté), lesdits gaz constitués essentiellement de CO et de $N_2$ en excès pouvant être dirigés vers la base d'un four d'incinération (non représenté).

La zone réactionnelle (b) est avantageusement chauffée par induction électromagnétique (1).

La température au centre de la zone réactionnelle est avantageusement mesurée grâce à une sonde de température (2).

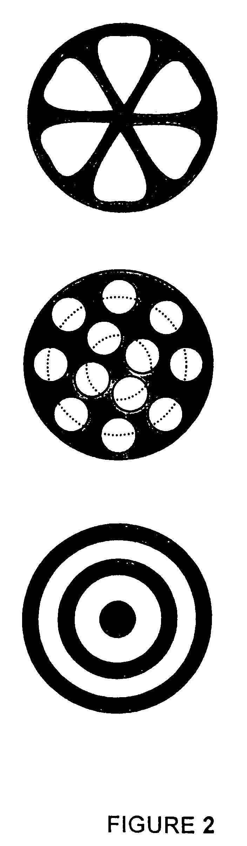

Les conduits de la zone réactionnelle, identiques ou différents, et dont le nombre est généralement compris entre 2 et 12, peuvent présenter une section de forme régulière ou quelconque. A titre d'exemples de forme régulière, on peut citer le cercle, l'ellipse, l'anneau, les polygones, droits ou curvilignes, réguliers ou irréguliers et les formes géométriques présentant un axe de symétrie (figure 2). Préférentiellement, on utilise des conduits présentant une section de forme circulaire.

La disposition des conduits à l'intérieur de la zone réactionnelle peut être réalisée de manière régulière ou irrégulière. Généralement, on dispose les conduits régulièrement tel que par exemple le centre de chaque conduit soit situé sur un cercle ou plusieurs cercles concentriques ayant pour origine le centre du réacteur ou en emboîtant les conduits les uns dans les autres (figure 2). Préférentiellement, on dispose les conduits de sorte que le centre de chaque conduit se situe sur un cercle ayant pour origine le centre du réacteur.

L'espace entre les conduits est constitué d'une matière solide conductrice de la chaleur. A titre d'exemples, on peut citer le graphite, le tungstène et le molybdène. Préférentiellement, on utilise la même matière que celle qui constitue les conduits, celle-ci consistant généralement en graphite.

La partie inférieure de la zone (c) est avantageusement prolongée par une virole de forme tronconique comprenant une alimentation en azote et l'extrémité inférieure de cette virole possède un doseur volumétrique étanche permettant l'extraction des granulés en vue de leur pesée en continu.

Dans le procédé conforme à l'invention, la zone (a) du réacteur tel que décrit ci-avant est alimentée en continu au moyen de granulés obtenus par mise en forme d'une pâte constituée par un mélange d'alumine et de carbone et avantageusement, notamment pour faciliter la préparation de cette pâte, d'un liant susceptible éventuellement de servir d'apport complémentaire en matière(s) première(s).

Par liant, on entend ici tout produit qui confère aux granulés une résistance mécanique compatible avec le procédé selon l'invention. Généralement, cette résistance mécanique est déterminée par mesure de la résistance à l'écrasement et de la perte à l'attrition.

Lorsque l'on utilise un liant constitué par une résine thermodurcissable capable de générer du carbone lors de sa pyrolyse, les proportions de carbone et de résine sont ajustées afin de conférer en même temps une porosité et une résistance mécanique satisfaisantes aux granulés.

Le noir de carbone apporte le volume poreux favorable à la vitesse de carbonitruration et la résine consolide les granulés.

La résine thermodurcissable peut être avantageusement choisie parmi les résines formophénoliques en solution aqueuse, mais il va de soi que d'autres résines peuvent être utilisées telles que les résines époxy, polyester, polyimides.

Le noir peut être choisi dans une large gamme de noirs de carbone, pour autant que le diamètre moyen des grains de noir se situe dans la zone 0,5 à 10 $\mu$m et de préférence 1 à 5 $\mu$m et que leur volume poreux soit au moins égal à 0,3 cm$^3$/g. A titre purement indicatif, on mentionnera notamment le noir d'acétylène dont le volume poreux peut atteindre 10 cm$^3$/g.

Quant à l'alumine, il convient de choisir une alumine de haute pureté et une dimension des grains du même ordre de grandeur que celle du noir est recommandée. Pour la préparation de la pâte (et des granulés) et pour des raisons d'homogénéisation, il peut être avantageux de faire appel à un dispersant par exemple du type sel d'ammonium d'un acide polyacrylique.

Dans la préparation des granulés, on met en oeuvre d'une manière générale une quantité de carbone total, c'est-à-dire carbone tel quel et carbone généré par la résine thermodurcissable, égale ou supérieure à la stoechiométrie de la réaction de carbonitruration (rapport C/Al$_2$O$_3$ = 3) : cet excès peut atteindre 100 % et est de préférence compris entre 0 et 50 %.

Ces granulés d'alimentation présentent une résistance à l'écrasement généralement comprise entre 0,2 et 3 MPa (mesurée selon la méthode "Bulk Crushing Strength" - Shell method) et une perte à l'attrition généralement inférieure à 15 %. Cette perte à l'attrition est mesurée selon la méthode qui consiste à introduire 25 g de granulés dans un tube métallique cylindrique fermé (diamètre interne 36 mm, longueur 305 mm), à fixer ledit tube sur un support tournant de telle sorte que l'axe de rotation du support passe par le milieu de la longueur du tube. Après une heure de traitement à une vitesse de 25 rpm, les solides obtenus sont tamisés (grille de 425 $\mu$m), les fines sont récupérées et pesées.

La perte à l'attrition est exprimée par la relation :

$$A\% = \frac{P2}{P1} \times 100$$

dans laquelle :

-    A % représente la perte à l'attrition
-    P1 représente le poids initial des granulés
-    P2 repésente le poids de fines obtenues

Les granulés frais sont introduits dans la zone (a) du réacteur et leur niveau est maintenu constant grâce à une sonde située dans la partie supérieure de cette zone (non représentée).

Le déplacement des granulés les conduit dans la zone de carbonitruration (b) puis dans la zone (c) où ils sont refroidis par l'azote alimentant le réacteur.

On extrait ainsi, grâce au doseur volumétrique situé à la base du lit coulant, des granulés froids pouvant contenir un excès de carbone (AlN + C), lesdits granulés présentant une teneur en $\alpha$Al$_2$O$_3$ résiduaire inférieure à 0,5 % par rapport à AlN (mesure effectuée par diffraction des rayons X).

Le carbone excédentaire peut être éliminé par combustion dans un gaz contenant de l'oxygène, de préférence à une température n'excédant pas 700°C.

Le nitrure d'aluminium pur est finalement désaggloméré, par exemple dans un broyeur à jet d'air, avantageusement équipé d'une chambre de broyage revêtue d'élastomère, afin de prévenir toute contamination.

La poudre de nitrure d'aluminium obtenue grâce à la mise en oeuvre du procédé décrit ci-avant se présente sous forme de particules de taille moyenne comprise entre 0,5 et 5 $\mu$m, constituées d'AlN avec une teneur résiduaire en $\alpha Al_2O_3$ n'excédant pas 0,5 % (en poids par rapport à AlN) et une surface spécifique B.E.T. au moins égale à 2 $m^2$/g et pouvant atteindre 5 $m^2$/g.

L'invention est illustrée par les exemples suivants.

## Exemple 1

1 - On mélange 550 parties en poids d'alumine de haute pureté, finement broyée (taille moyenne des grains : 1 $\mu$m - Norme ASTM C678; volume poreux : 0,76 $cm^3$/g) avec 182 parties en poids de noir d'acétylène (taille moyenne des grains : 2 à 3 $\mu$m; volume poreux : 7,0 $cm^3$/g), 257 parties en poids de résine formophénolique en solution aqueuse (concentration 60% environ) et 11 parties en poids d'un dispersant polyacrylate d'ammonium.

Le mélange est traité dans un malaxeur revêtu d'alumine jusqu'à disparition des particules blanches d'alumine.

La pâte résultante sert à alimenter une presse à filer dont les orifices d'extrusion ont un diamètre de 3 mm. A la sortie de ces orifices, un coupeur tronçonne les joncs à une longueur de 6 mm.

Les granulés ainsi obtenus, séchés à 150°C dans une étuve ventilée (perte de poids de 10,8%), ont la composition pondérale suivante :

- alumine      : 61,6 %
- carbone      : 20,4 %
- résine        : 17,5 %
- dispersant   : 0,5 %

La résistance à l'écrasement des granulés est de 2,8 MPa et la perte à l'attrition est égale à 2,2 %.

2 - Les granulés servent à alimenter le réacteur à lit coulant selon la figure 1 fonctionnant en continu.

La zone réactionnelle comporte quatre tubes rectilignes de 110 mm de diamètre interne creusés dans le graphite et circonscrits dans un cercle de 300 mm de diamètre. L'ensemble de ces tubes présente un volume de 26,6 l.

Le débit d'alimentation des granulés est de 4,05 kg/h.

Le réacteur est alimenté à sa partie inférieure (c) par de l'azote au débit de 24 kg/h.

La température de la paroi externe de la zone réactionnelle (b) est de 1450-1700°C, le temps de séjour dans cette zone étant d'environ 7 heures.

La température du graphite situé au niveau de l'axe central de la zone réactionnelle, mesurée grâce à la sonde (2), est du même ordre de grandeur que celle de la paroi externe (dans un plan horizontal donné). La différence de température entre la paroi externe et le centre d'un conduit est inférieure à 50 °C.

A la sortie de la zone (c), les granulés carbonitrurés refroidis sont soutirés à la vitesse de 2,3 kg/h (ce qui correspond à 2,0 kg/h de nitrure d'aluminium à 100 %).

Dans ces conditions, la productivité du réacteur est égale à 0,075 kg de nitrure d'aluminium à 100 % par heure et par litre de zone réactionnelle.

3 - Les granulés sont repris et étalés sur des plateaux en inconel en couche d'environ 1 cm d'épaisseur puis chargés dans un four discontinu chauffé électriquement, la température étant maintenue homogène à 650°C +/- 5°C par circulation d'air. On maintient cette température pendant 8 heures. La perte de masse est d'environ 15 %.

Après ce traitement, le taux de carbone libre résiduaire est inférieur à 700 ppm, la teneur en oxygène ne dépassant pas 1 %.

Le nitrure d'aluminium ainsi obtenu est finalement désaggloméré dans un broyeur à jet d'air, aux parois revêtues d'élastomère.

La taille moyenne des particules de nitrure d'aluminium final est de 1 $\mu$m et la surface spécifique B.E.T. de ce nitrure d'aluminium est 4 $m^2$/g.

## Exemple 2 (Comparatif)

On opère dans les conditions de l'exemple 1 en présence du réacteur de la figure 1 modifié en ce que la zone réactionnelle consiste en un seul tube présentant un diamètre interne de 300 mm et un volume de 49,5 l.

Le débit d'alimentation des granulés est de 4,2 kg/h.

Le réacteur est alimenté à sa partie inférieure (c) par de l'azote au débit de 16 kg/h.

Le temps de séjour dans la zone réactionnelle est d'environ 12 heures.

Pour un plan horizontal donné, on mesure une différence de température entre la paroi externe de la zone réactionnelle et le centre du conduit supérieure à 200 °C.

A la sortie de la zone (c), les granulés carbonitrurés refroidis sont soutirés à la vitesse de 2,40 kg/h (ce qui correspond à 2,04 kg/h de nitrure d'aluminium à 100 %).

Dans ces conditions, la productivité du réacteur est égale à 0,0412 kg de nitrure d'aluminium à 100 % par heure et par litre de zone réactionnelle.

La taille moyenne des particules de nitrure d'aluminium final est de 1,4 $\mu$m et la surface spécifique B.E.T. de ce nitrure d'aluminium est 3,5 $m^2$/g.

## Revendications

1. Procédé de préparation en continu de nitrure d'aluminium par réaction de carbonituration à partir d'alumine, de carbone et d'azote caractérisé en ce que la réaction est effectuée dans un réacteur à lit coulant dont la zone réactionnelle comporte une pluralité de conduits, l'espace entre les-dits conduits étant constitué d'une matière solide conductrice de la chaleur.

2. Procédé selon la revendication 1 caractérisé en ce que les conduits, identiques ou différents, présentent une section de forme régulière.

3. Procédé selon la revendication 2 caractérisé en ce que la forme régulière est choisie parmi le cercle, l'ellipse, l'anneau, les polygones droits ou curvilignes, réguliers ou irréguliers et les formes géométriques présentant un axe de symétrie.

4. Procédé selon l'une des revendications 2 ou 3 caractérisé en ce que la forme est circulaire.

5. Procédé selon l'une des revendications 1 à 4 caractérisé en ce que les conduits sont disposés de manière régulière à l'intérieur de la zone réactionnelle.

6. Procédé selon la revendication 5 caractérisé en ce que l'on dispose les conduits de sorte que leur centre soit situé sur un ou plusieurs cercles concentriques ayant pour origine le centre du réacteur.

7. Procédé selon la revendication 5 caractérisé en ce que les conduits sont emboîtés les uns dans les autres.

8. Procédé selon l'une des revendications 1 à 7 caractérisé en ce que l'alumine et le carbone, associé à un liant, sont mis en oeuvre sous forme de granulés présentant une résistance à l'écrasement comprise entre 0,2 et 3 MPa et une perte à l'attribution inférieure à 15 %.

## Claims

1. Process for the continuous preparation of aluminium nitride by a carbonitriding reaction starting from alumina, carbon and nitrogen, characterized in that the reaction is carried out in a moving-bed reactor whose reaction area is composed of a plurality of conduits, the space between the said conduits consisting of a solid heat-conducting material.

2. Process according to Claim 1, characterized in that the conduits, which may be identical or different, have a cross-section of regular shape.

3. Process according to Claim 2, characterized in that the regular shape is chosen from circles, ellipses, annuli, right or curvilinear polygons, either regular or non-regular, and geometrical shapes having an axis of symmetry.

4. Process according to either of Claims 2 and 3, characterized in that the shape is circular.

5. Process according to one of Claims 1 to 4, characterized in that the conduits are arranged uniformly inside the reaction area.

6. Process according to Claim 5, characterized in that the conduits are arranged such that their centre is located on one or more concentric circles whose origin is the centre of the reactor.

7. Process according to Claim 5, characterized in that the conduits are nested within each other.

8. Process according to one of Claims 1 to 7, characterized in that alumina and carbon, combined with a binder, are employed in the form of granules having a crushing strength of between 0.2 and 3 MPa and an attrition loss of less than 15 %.

## Patentansprüche

1. Verfahren zur kontinuierlichen Herstellung von Aluminiumnitrid durch Carbonitridierungsreaktion ausgehend von Aluminiumoxid, Kohlenstoff und Stickstoff, dadurch gekennzeichnet, daß die Reaktion in einem Fließbettreaktor durchgeführt wird, dessen Reaktionszone eine Vielzahl von Kanälen umfaßt, wobei der Zwischenraum zwischen diesen Kanälen aus einem festen, wärmeleitfähigen Material besteht.

2. Verfahren nach Anspruch 1, dadurch gekennzeichnet, daß die Kanäle, identisch oder verschieden, einen Schnitt mit regelmäßiger Form aufweisen.

3. Verfahren nach Anspruch 2, dadurch gekennzeichnet, daß die regelmäßige Form ausgewählt ist aus einem Kreis, einer Ellipse, einem Ring, einem geradlinigen oder gekrümmten, regelmäßigen oder unregelmäßigen Polygon, wobei die geometrischen Formen eine Symmetrieachse aufweisen.

4. Verfahren nach Anspruch 2 oder 3, dadurch gekennzeichnet, daß die Form kreisförmig ist.

5. Verfahren nach einem der Ansprüche 1 bis 4, dadurch gekennzeichnet, daß die Kanäle in regelmäßiger Weise im Inneren der Reaktionszone angeordnet sind.

6. Verfahren nach Anspruch 5, dadurch gekennzeichnet, daß man die Kanäle so anordnet, daß sich ihr Zentrum über einem oder mehreren konzentrischen Kreisen befindet, die vom Zentrum des Reaktors ausgehen.

7. Verfahren nach Anspruch 5, dadurch gekennzeichnet, daß die Kanäle ineinandergreifen.

8. Verfahren nach einem der Ansprüche 1 bis 7, dadurch gekennzeichnet, daß das Aluminiumoxid und der Kohlenstoff, der zusammen mit einem Bindemittel vorliegt, in Form von Granulaten eingesetzt werden, die eine Abriebfestigkeit zwischen 0,2 und 3 MPa und einen Abriebverlust von weniger als 15 % aufweisen.

FIGURE 1

FIGURE 2